(19) 

**Europäisches Patentamt**
**European Patent Office**
**Office européen des brevets**

(11) **EP 1 916 166 B1**

(12) **EUROPÄISCHE PATENTSCHRIFT**

(45) Veröffentlichungstag und Bekanntmachung des Hinweises auf die Patenterteilung:
**14.12.2011 Patentblatt 2011/50**

(51) Int Cl.:
***B60T 8/172*** *(2006.01)*

(21) Anmeldenummer: **06123105.6**

(22) Anmeldetag: **27.10.2006**

(54) **Verfahren und Vorrichtung zur Abschätzung der Fahrzeuglängsgeschwindigkeit eines Kraftfahrzeugs**

Method and apparatus for estimating longitudinal vehicle speed of an automotive vehicle

Procédé et dispositif permettant d'estimer la vitesse longitudinale d'un véhicule automobile

(84) Benannte Vertragsstaaten:
**DE FR GB**

(43) Veröffentlichungstag der Anmeldung:
**30.04.2008 Patentblatt 2008/18**

(73) Patentinhaber: **Ford Global Technologies, LLC Dearborn, MI 48126 (US)**

(72) Erfinder:
• **Mao, Yiqin**
**52072 Aachen (DE)**
• **Nehls, Oliver**
**52064 Aachen (DE)**

• **Graaf, Roger**
**6291 VH Vaals (NL)**
• **Zegelaar, Peter**
**6418 JD Heerlen (NL)**

(74) Vertreter: **Drömer, Hans-Carsten Henry-Ford Str. 1 50725 Köln (DE)**

(56) Entgegenhaltungen:
EP-A2- 0 992 411    DE-A1- 3 833 212
DE-A1- 4 314 830    DE-A1- 10 221 900
US-B1- 6 816 804

EP 1 916 166 B1

**Beschreibung**

Die vorliegende Erfindung betrifft ein Verfahren und eine Vorrichtung zur Abschätzung der Fahrzeuglängsgeschwindigkeit eines Kraftfahrzeugs, wobei Fahrzeugraddrehzahlen einzelner Fahrzeugräder mittels Fahrzeugraddrehzahl-Sensoren bestimmt und die Fahrzeuglängsgeschwindigkeit als Funktion der Fahrzeugraddrehzahl wenigstens eines in Abhängigkeit vom Betriebszustand des Kraftfahrzeuges ausgewählten Fahrzeugrades abgeschätzt wird.

Unter "Fahrzeuglängsgeschwindigkeit" wird hier und im Folgenden entsprechend der üblichen Terminologie die Geschwindigkeit im Schwerpunkt des Fahrzeugs entlang der karosserieeigenen Fahrzeuglängsachse verstanden. Die Fahrzeuglängsgeschwindigkeit ist eine zur Beschreibung des Betriebszustandes eines Kraftfahrzeugs wichtige Größe, welche beispielsweise bei der Gier- und Schlupfregelung verwendet wird. Es sind diverse Verfahren und Vorrichtungen bekannt, bei denen die Fahrzeuglängsgeschwindigkeit oder auch die Fahrzeug-Referenzgeschwindigkeit (d.h. die Vektorsumme aus Fahrzeuglängs- und Fahrzeugquergeschwindigkeit) als Funktion der Drehzahl eines oder mehrerer ausgewählter Fahrzeugräder bestimmt wird.

Aus DE 43 14 830 A1 ist ein Verfahren zur Bestimmung der Referenzgeschwindigkeit eines Fahrzeuges bekannt, bei welchem je nach Fahrsituation (z. B. "Geradeausfahrt mit konstanter Geschwindigkeit", "Verzögern durch Motorschubbetrieb" od. dgl.) die Referenzgeschwindigkeit aus der Radumfangsgeschwindigkeit eines oder mehrerer Räder abgeleitet wird. Beispielsweise sind bei Verzögerungen und gleichzeitig auftretender hoher Querbeschleunigung (Kurvenbremsung) diejenigen Räder mit der größten Radlast wie die Referenzgeschwindigkeit ausschlaggebend. In diesem Fall wird die Referenzgeschwindigkeit als arithmetischer Mittelwert des rechten und linken, nicht angetriebenen Rades berechnet.

Aus EP 0 992 411 A2 ist ein Verfahren zur Schätzung der Fahrzeuggeschwindigkeit zur Regulierung der ABS-Funktion bekannt, bei welchem Betriebszustände des Fahrzeugs auf Basis von "flags" unterschieden werden, wobei diese "flags" jeweils eine Tendenz zum Bremseingriff signalisieren.

Aus US 2004/0172183 A1 ist ein Verfahren zur Bestimmung der Fahrzeuglängsgeschwindigkeit bekannt, bei dem die Nicklage zur Korrektur der einzelnen Fahrzeugraddrehzahlen verwendet wird. Aus US 6,223,135 B1 und US 6,112,146 ist es bekannt, zur Auswahl eines für die Geschwindigkeitsabschätzung über die Fahrzeugdrehzahl geeigneten Fahrzeugrades Plausibilitätsprüfungen hinsichtlich eines auf Basis der ermittelten Drehzahlen bestimmten Betriebszustandes durchzuführen.

Aus US 5,184,876 ist ein Antiblockierbremssystem bekannt, bei welchem die Fahrzeug-Referenzgeschwindigkeit unter Zuhilfenahme einer Hilfsreferenz gebildet wird. Außerhalb einer ABS-Regelung wird die Referenzgeschwindigkeit aus der mittleren Drehzahl der nicht angetriebenen Fahrzeugräder bestimmt. Eine Änderung der Referenzgeschwindigkeitsbildung vom Mittelwert zur Verwendung der Steigung der Hilfsreferenz und der Geschwindigkeit des zweitschnellsten Rads wird sowohl bei Regelbeginn als auch außerhalb der Regelung vorgenommen, wenn die Summe der Beträge aller Radschlüpfe einen Schwellenwert überschreitet.

Aus US 5,365,444 ist es bekannt, nach Bestimmung der Umdrehungsgeschwindigkeit von wenigstens einem Antriebs- und einem mitlaufenden Rad des Fahrzeugs die Fahrzeuggeschwindigkeit auf Basis der höchsten dieser Umdrehungsgeschwindigkeiten abzuschätzen, wobei diese Schritte in vorbestimmten Zeitabständen wiederholt durchgeführt werden. Wenn der aktuell erhaltene Schätzwert der Fahrzeuggeschwindigkeit größer als die Geschwindigkeiten der mitlaufenden Räder und geringer als die größte Umdrehungsgeschwindigkeiten ist, wird die Fahrzeuggeschwindigkeit auf den zuletzt bestimmten Schätzwert gesetzt.

Es ist Aufgabe der vorliegenden Erfindung, ein alternatives Verfahren und eine alternative Vorrichtung zur Abschätzung der Fahrzeuglängsgeschwindigkeit eines Kraftfahrzeugs bereitzustellen, welche eine zuverlässige Abschätzung mit verhältnismäßig geringem Aufwand und niedriger Komplexität ermöglichen.

Diese Aufgabe wird durch das Verfahren gemäß den Merkmalen des unabhängigen Patentanspruches 1 bzw. die Vorrichtung gemäß den Merkmalen des unabhängigen Patentanspruches 5 gelöst.

Ein erfindungsgemäßes Verfahren zur Abschätzung der Fahrzeuglängsgeschwindigkeit eines Kraftfahrzeugs, wobei Fahrzeugraddrehzahlen einzelner Fahrzeugräder mittels Fahrzeugraddrehzahl-Sensoren bestimmt und die Fahrzeuglängsgeschwindigkeit als Funktion der Fahrzeugraddrehzahl wenigstens eines in Abhängigkeit vom Betriebszustand des Kraftfahrzeuges ausgewählten Fahrzeugrades abgeschätzt wird, weist folgende Schritte auf:

- Ermitteln, durch Ermitteln der durch den Fahrer oder über ein fahrzeugeigenes Regelsystem ausgeübten Bremsmomente, in welchem von folgenden drei Betriebszuständen sich das Fahrzeug momentan befindet:

   a) das Bremspedal wird betätigt oder beide nicht angetriebenen Fahrzeugräder erfahren ein durch den Fahrer oder über ein fahrzeugeigenes Regelsystem ausgeübtes Drehmoment oberhalb eines vorbestimmten Schwellenwertes;

   b) genau eines der beiden nicht angetriebenen Fahrzeugräder erfährt ein durch den Fahrer oder über ein fahrzeugeigenes Regelsystem ausgeübtes Bremsmoment oberhalb des vorbestimmten Schwellenwertes; oder

c) keines der beiden nicht angetriebenen Fahrzeugräder erfährt ein durch den Fahrer oder über ein fahrzeugeigenes Regelsystem ausgeübtes Bremsmoment oberhalb des vorbestimmten Schwellenwertes; und

Berechnen, in Abhängigkeit von dem ermittelten Betriebszustand, eines Schätzwertes für die Fahrzeuglängsgeschwindigkeit mittels eines Algorithmus aus drei unterschiedlichen Algorithmen, wobei jeder dieser Algorithmen einem der drei obigen Betriebszustände a) - c) zugeordnet ist;

wobei dem Betriebszustand b) ein Algorithmus zugeordnet wird, gemäß dem eine für den maximalen Wert der Fahrzeugrad-Längsgeschwindigkeiten der beiden nicht angetriebenen Fahrzeugräder charakteristische Größe ermittelt wird.

Ausgehend von der Erkenntnis, dass die Drehzahl bzw. die Längsgeschwindigkeit derjenigen Fahrzeugräder eine geeignete Grundlage zur Abschätzung der Fahrzeuglängsgeschwindigkeit darstellen, wird durch die Erfindung im Wege einer Fallunterscheidung zwischen drei Betriebszuständen ein Verfahren niedriger Komplexität geschaffen, um die Fahrzeuglängsgeschwindigkeit unmittelbar durch Umrechnung der jeweils bestimmten Fahrzeugraddrehzahlen und ohne Erfordernis weiterer Sensoren abzuschätzen. Dadurch, dass erfindungsgemäß lediglich Fahrzeugraddrehzahl-Sensoren verwendet werden, die als Standard-Sensoren in einem Antiblockiersystem vorhanden sind, ist das Verfahren einfach und kostengünstig zu implementieren. Der Verzicht auf einen Längsbeschleunigungssensor senkt die Herstellungskosten und verringert zudem auch die Komplexität des Verfahrens, da auf eine mit der Verwendung eines Längsbeschleunigungssensors einhergehende, fortwährende Berechnung von dessen Regelabweichung (Offset) verzichtet werden kann.

Der erhaltene Schätzwert der Fahrzeuglängsgeschwindigkeit kann, zusammen mit anderen Zustandsgrößen, für die Abschätzung des dynamischen Fahrzeugverhaltens in Längs- bzw. Querrichtung verwendet werden. Anhand praktischer Tests, die u.a. auf schnee- und eisbedeckter Fahrbahn - folglich bei geringen Haftreibungszahlen- durchgeführt wurden, konnte eine gute Übereinstimmung zwischen den Messergebnissen und der erfindungsgemäß abgeschätzten Fahrzeugdynamik festgestellt werden.

Weitere Ausgestaltungen der Erfindung sind der Beschreibung sowie den Unteransprüchen zu entnehmen.

Die Erfindung wird nachstehend anhand bevorzugter Ausführungsformen unter Bezugnahme auf die beigefügte Abbildung erläutert. Es zeigt:

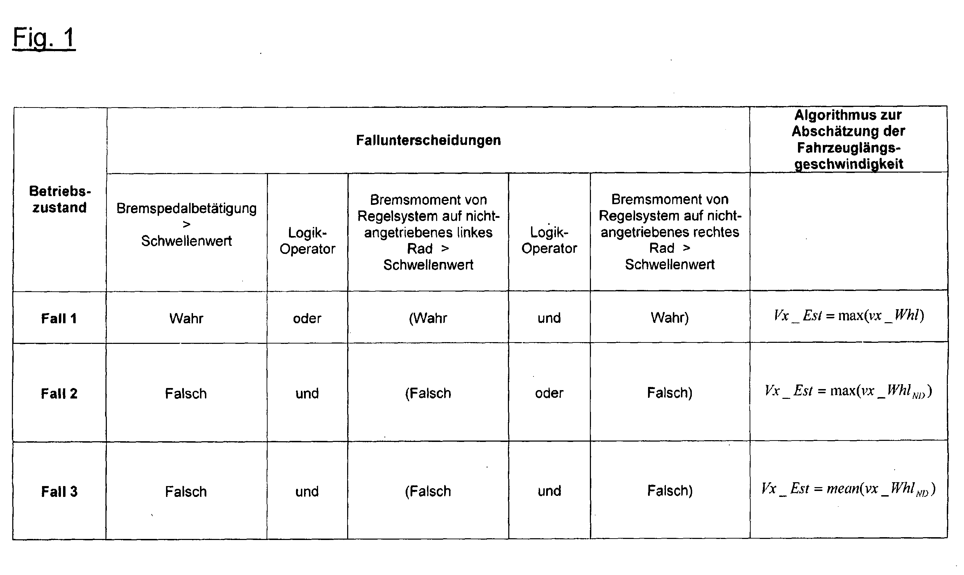

Figur 1    eine tabellarische Übersicht über die erfindungsgemäß unterschiedenen Betriebszustände zusammen mit den jeweils angewandten Algorithmen zur Berechnung der Fahrzeuglängsgeschwindigkeit.

Bei dem Fahrzeug, für welches erfindungsgemäß die Fahrzeuglängsgeschwindigkeit bestimmt wird, handelt es sich um ein Fahrzeug mit Zweiradantrieb. Ohne dass die Erfindung hierauf beschränkt ist, wird nachfolgend beispielhaft angenommen, dass die beiden Hinterräder die angetriebenen Fahrzeugräder und die beiden Vorderräder die nicht angetriebenen Fahrzeugräder sind. Die folgenden Gleichungen sind jedoch für den generellen Fall und somit allgemeingültig formuliert.

Gemäß dem Verfahren der vorliegenden Erfindung werden zunächst in bekannter Weise mittels Fahrzeugraddrehzahl-Sensoren, wie sie in einem Antiblockiersystem verwendet werden, die einzelnen Fahrzeugraddrehzahlen der einzelnen Fahrzeugräder bestimmt.

Des Weiteren wird ein momentaner Betriebszustand des Fahrzeugs hinsichtlich der auf die einzelnen nicht angetriebenen Fahrzeugräder durch den Fahrer oder über das fahrzeugeigene Regelsystem (z. B. die Stabilitätsregelung) ausgeübten Bremsmomente ermittelt. Dabei wird ein geeigneter vorbestimmter Schwellenwert festgelegt, oberhalb dessen ein signifikantes Bremsmoment als gegeben erachtet wird. Hierbei wird im Folgenden angenommen, dass die nicht angetriebenen Fahrzeugräder in sämtlichen Betriebszuständen, in denen sie kein Bremsmoment oberhalb dieses vorbestimmten Schwellenwertes erfahren, frei und ohne Schlupf rollen. In diesem Sinne werden bei dem erfindungsgemäßen Verfahren folgende drei Betriebszustände des Fahrzeugs unterschieden:

Fall 1: "Das Bremspedal wird betätigt oder keines der nicht angetriebenen Fahrzeugräder rollt frei". Dieser Fall ist gegeben, wenn entweder der Fahrer das Bremspedal oberhalb des vorbestimmten Schwellenwertes betätigt oder wenn beide nicht angetriebenen Fahrzeugräder aufgrund eines Befehls seitens eines Regelsystems ein Bremsmoment oberhalb des vorbestimmten Schwellenwertes erfahren.

Fall 2: "Nur eines der nicht angetriebenen Fahrzeugräder rollt frei". Dieser Fall ist gegeben, wenn der Fahrer das Bremspedal nicht bzw. nicht oberhalb des vorbestimmten Schwellenwertes betätigt und wenn nur eines der beiden nicht angetriebenen Fahrzeugräder aufgrund eines Befehls seitens des Regelsystems ein Bremsmoment oberhalb des vorbestimmten Schwellenwertes erfährt, während das andere der beiden nicht angetriebenen Fahrzeugräder frei läuft. Diese Situation tritt typischerweise bei aktiver Gierregelung auf.

Fall 3: "Beide nicht angetriebenen Fahrzeugräder rollen frei". Dieser Fall ist gegeben, wenn der Fahrer das Bremspedal nicht bzw. nicht oberhalb des vorbestimmten Schwellenwertes betätigt und wenn keines der beiden nicht angetriebenen Fahrzeugräder aufgrund eines Befehls seitens des Regelsystems ein Bremsmoment oberhalb des vorbestimmten Schwellenwertes erfährt.

Die aus der jeweiligen Drehzahl n folgenden Winkelgeschwindigkeiten $\omega$ (gemäß $\omega = 2*\pi*n$) der Vorderräder (im Weiteren: $\omega\text{-}WhlVec_{FRONT}$) bzw. die Winkelgeschwindigkeiten der Hinterräder (im Weiteren: $\omega\_WhlVec_{REAR}$) werden mittels der nachfolgenden Beziehungen in die entsprechenden Translationsgeschwindigkeiten der Vorderräder $v\_WhlVec_{FRONT}$ bzw. die Translationsgeschwindigkeiten der Hinterräder $v\_WhlVec_{REAR}$ umgerechnet:

$$v\_WhlVec_{FRONT} = \omega\_WhlVec_{FRONT} * L\_WhlRadius * \frac{\cos(\delta + \alpha)}{\cos(\alpha)} \qquad (1)$$

$$v\_WhlVec_{REAR} = \omega\_WhlVec_{REAR} * L\_WhlRadius \qquad (2)$$

Dabei bezeichnen $\delta$ den Lenkwinkel am Rad ("toe angle"), $\alpha$ den geschätzten Schräglaufwinkel ("side slip angle") und $L\text{-}WhlRadius$ den Fahrzeugradradius. Gleichung (2) beruht auf der Näherung, dass bei den Hinterrädern der Effekt des Radspurwinkels $\delta$ vernachlässigbar ist und eine diesbezügliche Korrektur unterbleiben kann. Zur Formulierung der Brechungsgleichungen ist das ISO-Koordinatensystem zu Grunde gelegt.

Die so erhaltenen Translationsgeschwindigkeiten der Fahrzeugräder werden in die äquivalenten Längsgeschwindigkeiten am Schwerpunkt $(vx\_WhlVec_{FRONT}, vx\_Whlvec_{REAR})$ unter geometrischer Korrektur wie folgt umgerechnet:

$$vx\_WhlVec_{FRONT} = v\_WhlVec_{FRONT} \pm \frac{L\_Track_{FRONT}}{2}\dot{\psi} \qquad (3)$$

$$vx\_WhlVec_{REAR} = v\_WhlVec_{REAR} \pm \frac{L\_Track_{REAR}}{2}\dot{\psi} \qquad (4)$$

Dabei bezeichnen $\dot{\psi}$ die Giergeschwindigkeit und $L\_Track$ die Spurweite des Fahrzeugs. Aus den so erhaltenen Längsgeschwindigkeiten sämtlicher Fahrzeugräder $vx\_WhlVec$ wird nun die Fahrzeuglängsgeschwindigkeit $Vx\_Est$ je nach dem momentan gültigen Betriebszustand wie folgt abgeschätzt:

Im Fall 1 (= "Bremspedal wird betätigt oder keines der nicht angetriebenen Fahrzeugräder rollt frei") wird zur Abschätzung der gesuchten Fahrzeuglängsgeschwindigkeit $Vx\_Est$ der maximale Wert sämtlicher vier den einzelnen Fahrzeugrädern zugeordneten Fahrzeugrad-Längsgeschwindigkeiten $vx\_WhlVec$ verwendet, d.h. der Schätzwert für die Fahrzeuglängsgeschwindigkeit $Vx\_Est$ wird gemäß der folgenden Beziehung ermittelt:

$$Vx\_Est = \max(vx\_WhlVec) \qquad (5)$$

Im Fall 2 (= "nur eines der nicht angetriebenen Fahrzeugräder rollt frei") wird angenommen, dass dasjenige der beiden nicht angetriebenen Fahrzeugräder (im Beispiel der Vorderräder) frei läuft, welches kein Bremsmoment oberhalb des vorbestimmten Schwellenwertes erfährt. Zur Abschätzung der gesuchten Fahrzeuglängsgeschwindigkeit $Vx\_Est$ wird der maximale Wert der Fahrzeugrad-Längsgeschwindigkeiten $vx\_WhlVec_{ND}$ der beiden nicht angetriebenen Fahrzeugräder (ND= "non driven"= "nicht-angetrieben") verwendet, d.h. der Schätzwert für die Fahrzeuglängsgeschwindigkeit $Vx\_Est$ wird gemäß folgender Beziehung ermittelt:

$$Vx\_Est = \max(vx\_WhlVec_{ND}) \qquad\qquad (6)$$

Der erhaltene Wert für die gesuchte Fahrzeuglängsgeschwindigkeit *Vx_Est* entspricht somit im Fall 2 der Fahrzeugrad-Längsgeschwindigkeit *vx_WhlVec_{ND}* von demjenigen der beiden nicht angetriebenen Fahrzeugräder, welches kein Bremsmoment oberhalb des vorbestimmten Schwellenwertes erfährt.

Im Fall 3 (= "beide nicht angetriebenen Fahrzeugräder rollen frei") wird der Schätzwert der Fahrzeuglängsgeschwindigkeit *Vx_Est* gleich dem Mittelwert der Fahrzeugrad-Längsgeschwindigkeiten *vx_WhlVec_{ND}* der nicht angetriebenen Fahrzeugräder gesetzt, d.h. der Schätzwert für die Fahrzeuglängsgeschwindigkeit *Vx_Est* wird gemäß folgender Beziehung ermittelt:

$$Vx\_Est = Mittelwert(vx\_WhlVec_{ND}) \qquad\qquad (7)$$

In Fig. 1 sind tabellarisch die einzelnen, gemäß dem erfindungsgemäßen Verfahren unterschiedenen Betriebszustände zusammen mit dem jeweils angewandten Algorithmus zur Berechnung der Fahrzeuglängsgeschwindigkeit zusammengefasst.

Gemäß einer bevorzugten Ausgestaltung wird der erhaltene Schätzwert für die Fahrzeuglängsgeschwindigkeit einem Algorithmus (z.B. Kalman-Filter) zugeführt. Dies dient zur Bestimmung weiterer fahrzeugdynamischer Zustände in Längs- bzw. Querrichtung des Kraftfahrzeuges.

Der Algorithmus kann vereinfacht werden für den Fall, dass wenige Signale zur Verfügung stehen, wie z.B. der Schräglaufwinkel, der Lenkradwinkel und die Giergeschwindigkeit. Die Qualität der Längsgeschwindigkeitsschätzung wird entsprechend weniger gut. Solche Vereinfachungen sind:

- Der Einfluss des Schräglaufwinkels $\alpha$ kann vernachlässigt werden, indem in Gleichung (1) $\alpha$ gleich Null gesetzt wird.
- Der Einfluss des Lenkradwinkels $\delta$ kann vernachlässigt werden, indem in Gleichung (1) $\delta$ gleich Null gesetzt wird.
- Der Einfluss der Giergeschwindigkeit $\psi$ kann vernachlässigt werden, indem in den Gleichungen (3) und (4) $\psi$ gleich Null gesetzt wird.

**Patentansprüche**

1. Verfahren zur Abschätzung der Fahrzeuglängsgeschwindigkeit eines Kraftfahrzeugs, wobei Fahrzeugraddrehzahlen einzelner Fahrzeugräder mittels Fahrzeugraddrehzahl-Sensoren bestimmt und die Fahrzeuglängsgeschwindigkeit als Funktion der Fahrzeugraddrehzahl wenigstens eines in Abhängigkeit vom Betriebszustand des Kraftfahrzeuges ausgewählten Fahrzeugrades abgeschätzt wird,
   **dadurch gekennzeichnet, dass**
   das Verfahren folgende Schritte aufweist:

   Ermitteln, durch Ermitteln der durch den Fahrer oder über ein fahrzeugeigenes Regelsystem ausgeübten Bremsmomente, in welchem von folgenden drei Betriebszuständen sich das Fahrzeug momentan befindet:

   a) das Bremspedal wird betätigt oder beide nicht angetriebenen Fahrzeugräder erfahren ein durch den Fahrer oder über ein fahrzeugeigenes Regelsystem ausgeübtes Bremsmoment oberhalb eines vorbestimmten Schwellenwertes;
   b) genau eines der beiden nicht angetriebenen Fahrzeugräder erfährt ein durch den Fahrer oder über ein fahrzeugeigenes Regelsystem ausgeübtes Bremsmoment oberhalb des vorbestimmten Schwellenwertes; oder
   c) keines der beiden nicht angetriebenen Fahrzeugräder erfährt ein durch den Fahrer oder über ein fahrzeugeigenes Regelsystem ausgeübtes Bremsmoment oberhalb des vorbestimmten Schwellenwertes;

   und
   Berechnen, in Abhängigkeit von dem ermittelten Betriebszustand, eines Schätzwertes für die Fahrzeuglängsgeschwindigkeit mittels eines Algorithmus aus drei unterschiedlichen Algorithmen, wobei jeder dieser Algorithmen einem der drei Betriebszustände a)-c) zugeordnet ist;
   wobei dem Betriebszustand b) ein Algorithmus zugeordnet wird, gemäß dem eine für den maximalen Wert der Fahrzeugrad-Längsgeschwindigkeiten der beiden nicht angetriebenen Fahrzeugräder charakteristische Größe ermittelt wird.

**2.** Verfahren nach Anspruch 1,
**dadurch gekennzeichnet, dass**
dem Betriebszustand a) ein Algorithmus zugeordnet wird, gemäß dem eine für den maximalen Wert von sämtlichen vier den einzelnen Fahrzeugrädern zugeordneten Fahrzeugrad-Längsgeschwindigkeiten charakteristische Größe ermittelt wird.

**3.** Verfahren nach Anspruch 1 oder 2,
**dadurch gekennzeichnet, dass**
dem Betriebszustand c) ein Algorithmus zugeordnet wird, gemäß dem eine für den Mittelwert der Fahrzeugrad-Längsgeschwindigkeiten der nicht angetriebenen Fahrzeugräder charakteristische Größe ermittelt wird.

**4.** Verfahren nach einem der Ansprüche 1 bis 3,
**dadurch gekennzeichnet, dass**
der Schätzwert für die Fahrzeuglängsgeschwindigkeit einem Algorithmus, vorzugsweise einem Kalman-Filter, zur Bestimmung der fahrzeugdynamischen Zustände in Längs- bzw. Querrichtung zugeführt wird.

**5.** Vorrichtung zur Abschätzung der Fahrzeuglängsgeschwindigkeit eines Kraftfahrzeugs mit Fahrzeugraddrehzahl-Sensoren und einem fahrzeugeigenen Regelsystem,
**dadurch gekennzeichnet, dass**
das Regelsystem derart ausgebildet ist, ein Verfahren nach einem der vorhergehenden Ansprüche auszuführen.

## Claims

**1.** Method for estimating the longitudinal vehicle speed of an automotive vehicle, wherein vehicle wheel speeds of individual vehicle wheels are determined by means of vehicle wheel sensors, and the vehicle longitudinal speed is estimated as a function of the vehicle wheel speed of at least one vehicle wheel which is selected as a function of the operating state of the motor vehicle,
**characterized in that**
the method has the following steps:

determining which of the following three operating states the vehicle is in at a given time by determining the braking torques applied by the driver or by means of a vehicle-specific control system:

a) the brake pedal is actuated or both non-driven vehicle wheels experience a braking torque above a predetermined threshold value, which braking torque is applied by the driver or by means of a vehicle-specific control system;
b) precisely one of the two non-driven vehicle wheels experiences a braking torque above the predetermined threshold value, which braking torque is applied by the driver or by means of a vehicle-specific control system; or
c) neither of the two non-driven vehicle wheels experiences a braking torque above the predetermined threshold value, which braking torque is applied by the driver or by means of a vehicle-specific control system; and

calculating, as a function of the determined operating state, an estimated value for the vehicle longitudinal speed by means of one algorithm from three different algorithms, wherein each of these algorithms is assigned to one of the three operating states a)-c);
wherein the operating state b) is assigned an algorithm according to which a variable which is characteristic of the maximum value of the vehicle wheel longitudinal speeds of the two non-driven vehicle wheels is determined.

**2.** Method according to Claim 1,
**characterized in that**
the operating state a) is assigned an algorithm according to which a variable which is characteristic of the maximum value of all four vehicle wheel longitudinal speeds which are assigned to the individual vehicle wheels is determined.

**3.** Method according to Claim 1 or 2,
**characterized in that**
the operating state c) is assigned an algorithm according to which a variable which is characteristic of the mean value of the vehicle wheel longitudinal speeds of the non-driven vehicle wheels is determined.

**4.** Method according to one of Claims 1 to 3,
**characterized in that**
the estimated value for the vehicle longitudinal speed is fed to an algorithm, preferably a Kalman filter, for determining the vehicle-dynamic states in the longitudinal direction and/or lateral direction.

**5.** Apparatus for estimating the vehicle longitudinal speed of a motor vehicle having vehicle wheel speed sensors and a vehicle-specific control system,
**characterized in that**
the control system is designed to carry out a method according to one of the preceding claims.

**Revendications**

**1.** Procédé d'estimation de la vitesse longitudinale d'un véhicule automobile, les vitesses de rotation de roue de véhicule des roues de véhicule individuelles étant déterminées au moyen de capteurs de vitesse de rotation de roue de véhicule et la vitesse longitudinale du véhicule étant estimée en fonction de la vitesse de rotation de roue de véhicule d'au moins une roue de véhicule sélectionnée en fonction de l'état opérationnel du véhicule automobile, **caractérisé en ce que** le procédé présente les étapes suivantes :

Détermination, en déterminant les moments de freinage exercés par le conducteur ou par le biais d'un système de régulation propre au véhicule, de l'état opérationnel parmi les trois états opérationnels ci-après dans lequel se trouve actuellement le véhicule :

a) la pédale de frein est actionnée ou les deux roues de véhicule non motrices subissent un moment de freinage exercé par le conducteur ou par le biais d'un système de régulation propre au véhicule au-dessus d'une valeur de seuil prédéfinie ;
b) précisément l'une des deux roues de véhicule non motrices subit un moment de freinage exercé par le conducteur ou par le biais d'un système de régulation propre au véhicule au-dessus de la valeur de seuil prédéfinie ; ou
c) aucune des deux roues de véhicule non motrices ne subit un moment de freinage exercé par le conducteur ou par le biais d'un système de régulation propre au véhicule au-dessus de la valeur de seuil prédéfinie ;

et
Calcul, en fonction de l'état opérationnel déterminé, d'une valeur estimée pour la vitesse longitudinale du véhicule au moyen d'un algorithme parmi trois algorithmes différents, chacun de ces algorithmes étant associé à l'un des trois états opérationnels a) - c) ;
à l'état opérationnel b) étant associé un algorithme selon lequel est déterminée une grandeur caractéristique pour la valeur maximale des vitesses longitudinales de roue du véhicule des deux roues de véhicule non motrices.

**2.** Procédé selon la revendication 1, **caractérisé en ce qu'**à l'état opérationnel a) est associé un algorithme selon lequel est déterminée une grandeur caractéristique pour la valeur maximale des vitesses longitudinales de roue du véhicule associées à toutes les quatre roues de véhicule individuelles.

**3.** Procédé selon la revendication 1 ou 2, **caractérisé en ce qu'**à l'état opérationnel c) est associé un algorithme selon lequel est déterminée une grandeur caractéristique pour la valeur moyenne des vitesses longitudinales de roue du véhicule des deux roues de véhicule non motrices.

**4.** Procédé selon l'une des revendications 1 à 3, **caractérisé en ce que** la valeur estimée pour la vitesse longitudinale du véhicule est acheminée à un algorithme, de préférence un filtre de Kalman, pour déterminer les états dynamiques du véhicule dans les sens longitudinal et transversal.

**5.** Dispositif d'estimation de la vitesse longitudinale d'un véhicule automobile avec des capteurs de vitesse de rotation de roue de véhicule et un système de régulation propre au véhicule, **caractérisé en ce que** le système de régulation est configuré de manière à mettre en oeuvre un procédé selon l'une des revendications précédentes.

# Fig. 1

| Betriebs-zustand | Fallunterscheidungen | | | | | Algorithmus zur Abschätzung der Fahrzeuglängs-geschwindigkeit |
|---|---|---|---|---|---|---|
| | Bremspedalbetätigung > Schwellenwert | Logik-Operator | Bremsmoment von Regelsystem auf nicht-angetriebenes linkes Rad > Schwellenwert | Logik-Operator | Bremsmoment von Regelsystem auf nicht-angetriebenes rechtes Rad > Schwellenwert | |
| Fall 1 | Wahr | oder | (Wahr | und | Wahr) | $Vx\_Est = \max(vx\_Whl)$ |
| Fall 2 | Falsch | und | (Falsch | oder | Falsch) | $Vx\_Est = \max(vx\_Whl_{ND})$ |
| Fall 3 | Falsch | und | (Falsch | und | Falsch) | $Vx\_Est = mean(vx\_Whl_{ND})$ |

EP 1 916 166 B1

**IN DER BESCHREIBUNG AUFGEFÜHRTE DOKUMENTE**

**In der Beschreibung aufgeführte Patentdokumente**

- DE 4314830 A1
- EP 0992411 A2
- US 20040172183 A1
- US 6223135 B1
- US 6112146 A
- US 5184876 A
- US 5365444 A